# EUROPEAN PATENT APPLICATION

(11) **EP 4 601 158 A1**
(43) Date of publication of application: **13.08.2025**
(21) Application number: 23874485.8
(22) Date of filing: 30.06.2023
(51) Int. Cl.: H02J 9/06, H02J 1/00, H02J 7/34

(54) **BACKUP POWER SUPPLY DEVICE AND CONTROL METHOD THEREFOR**

(30) Priority: 04.10.2022 JP 2022160427
(71) Applicant: Panasonic Intellectual Property Management Co., Ltd., Kadoma-shi, Osaka 571-0057 (JP)
(72) Inventor: ATAGO, Katsunori, Kadoma-shi, Osaka 571-0057 (JP); KAGEYAMA, Youichi, Kadoma-shi, Osaka 571-0057 (JP); TAKENAKA, Kazuo, Kadoma-shi, Osaka 571-0057 (JP); HAYASHI, Koichiro, Kadoma-shi, Osaka 571-0057 (JP); SUZUKI, Takumi, Kadoma-shi, Osaka 571-0057 (JP); NISHINAKA, Hiroki, Kadoma-shi, Osaka 571-0057 (JP)
(74) Representative: Novagraaf International SA
(86) International application number: PCT/JP2023/024348
(87) International publication number: WO 2024/075351

(57) **Abstract**

A backup power supply device (30) includes a first switch (21), a second switch (22), a third switch (23), a fourth switch (24), an auxiliary power supply (25), and a control circuit (31), wherein the first switch (21) includes a first diode (21a) provided in a direction in which a current supplied from the main power supply (10) flows to the second switch (22) when the first switch (21) is off, and when a power supply that supplies a DC voltage to the load (12) is switched from the main power supply (10) to the auxiliary power supply (25), the control circuit (31) executes a first step (S30) of turning off the first switch, a second step (S31) of turning on the third switch (23) and the fourth switch (24) after the first step (S30); and a third step (S32) of turning off the second switch (22) after the second step (S31).

## Description

### [Technical Field]

The present invention relates to a backup power supply device and a control method therefor, and more particularly to a backup power supply device and the like, which backs up the supply of a DC voltage to a load by the main power supply.

### [Background Art]

Conventionally, various power supply devices have been proposed as backup power supply devices that back up a supply of a DC voltage from a main power supply to a load (see, for example, Patent Literature (PTL) 1).

The power supply device of PTL 1 includes: a first conductive path serving as a power path between a first power supplier and a load; a second conductive path connected to the first conductive path and a second power supplier; a first switcher that is provided between a connector with the second conductive path and the first power supplier in the first conductive path, and switches between a non-conduction state in which current is cut off in both directions and a conduction state in which current is carried; a second switcher that is provided between the connector and the second power supplier in the second conductive path, and switches between a non-conduction state in which current is cut off in both directions and a conduction state in which current is carried; and a controller that controls respective switching operations of the first switcher and the second switcher.

Accordingly, even if an anomaly occurs on the side of one power supplier, it is possible to cut off the flow of current into the path from the other power supplier. For example, even if a short failure occurs in the second switcher, it is possible to cut off the flow of current into the second power supplier side from the first power supplier by turning off the first switcher.

### [Citation List]

### [Patent Literature]

PTL 1: Japanese Unexamined Patent Application Publication No. 2017-216795

### [Summary of Invention]

### [Technical Problem]

However, in the power supply device of PTL 1, when the power supplier that performs the supply of the DC voltage to the load is switched, there is an instant when both the first switcher and the second switcher are turned off, so that when the ground fault on the load side, or the like occurs, the voltage supplied to the load is temporarily cut off, and there is a possibility that the voltage supplied to the load will drop significantly to zero voltage or the like. Even if it is temporary, loads that cause fatal problems due to the supply voltage drop to zero are not uncommon, and if such a situation were to occur, the significance of having a backup power supply device would be lost.

Therefore, the present disclosure is intended to provide a backup power supply device and a control method therefor, which can prevent the supply voltage to the load from being cut off when a power supply that supplies a DC voltage to the load is switched.

### [Solution to Problem]

To achieve the above object, a backup power supply device according to one embodiment of the present disclosure is a backup power supply device that backs up a supply of a DC voltage from a main power supply to a load, the backup power supply device including: a first switch that is inserted into a path connecting the main power supply and the load, and turns on and off the supply of the DC voltage from the main power supply to the load; a second switch that is inserted into a path connecting the first switch and the load, and turns on and off the supply of the DC voltage to the load via the first switch; an auxiliary power supply for supplying a DC voltage to the load; a third switch that is inserted into a path connecting the auxiliary power supply and the load, and turns on and off the supply of the DC voltage from the auxiliary power supply to the load; a fourth switch that is inserted into a path connecting the third switch and the load, and turns on and off the supply of the DC voltage to the load via the third switch; and a control circuit that controls the first switch, the second switch, the third switch, and the fourth switch.

To achieve the above object, a control method for a backup power supply according to one embodiment of the present disclosure is a control method for a backup power supply device that backs up a supply of a DC voltage from a main power supply to a load, the backup power supply device including: a first switch that is inserted into a path connecting the main power supply and the load, and turns on and off the supply of the DC voltage from the main power supply to the load; a second switch that is inserted into a path connecting the first switch and the load, and turns on and off the supply of the DC voltage to the load via the first switch; an auxiliary power supply for supplying a DC voltage to the load; and a third switch that is inserted into a path connecting the auxiliary power supply and the load, and turns on and off the supply of the DC voltage from the auxiliary power supply to the load; a fourth switch that is inserted into a path connecting the third switch and the load, and turns on and off the supply of the DC voltage to the load via the third switch, the control method including: when a power supply that performs the supply of the DC voltage to the load is switched from the main power supply to the auxiliary power supply, in a state where the first switch and the second switch are on, and the third switch and the fourth switch are off, turning off one of the first switch and the second switch; turning on the third switch and the fourth switch after turning off one of the first switch and the second switch; and turning off an other of the first switch and the second switch after turning on the third switch and the fourth switch.

### [Advantageous Effects of Invention]

The present disclosure provides a backup power supply device and a control method for the backup power supply device, which can prevent the supply voltage to the load from being cut off when a power supply that supplies a DC voltage to the load is switched.

### [Brief Description of Drawings]

[FIG. 1]

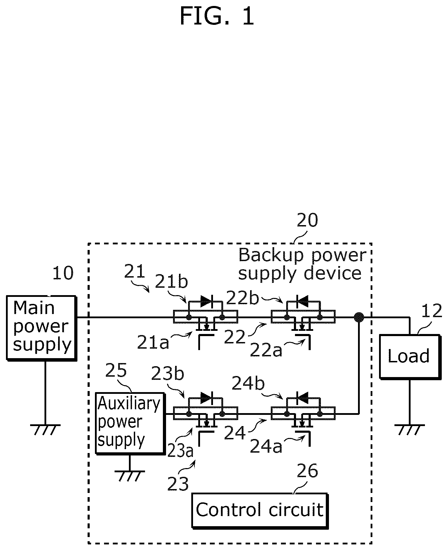

   FIG. 1 is a circuit diagram showing a structure of a backup power supply device according to a reference example.
[FIG. 2]

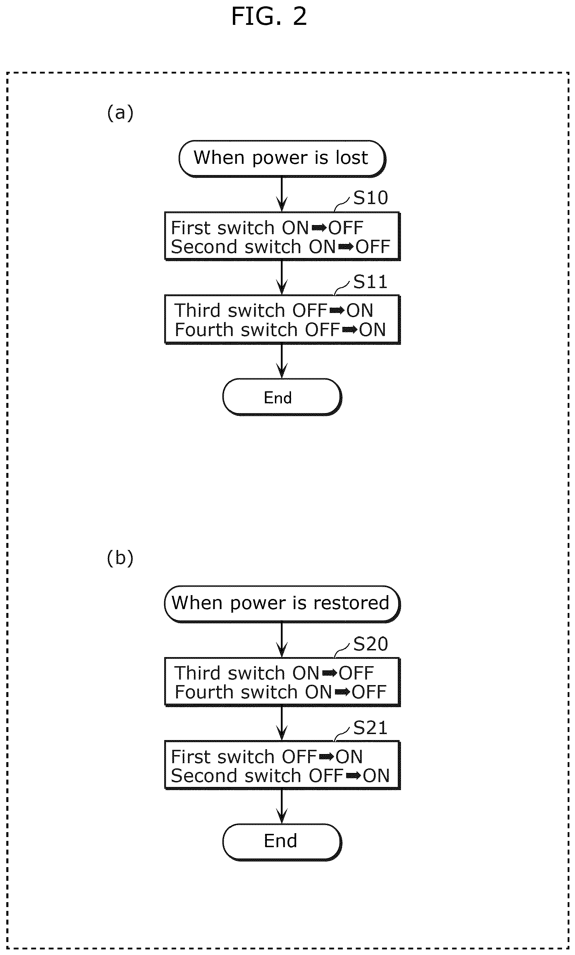

   FIG. 2 is a flow chart showing an operation of the backup power supply device according to the reference example switching a power supply that supplies a DC voltage to a load.
[FIG. 3]

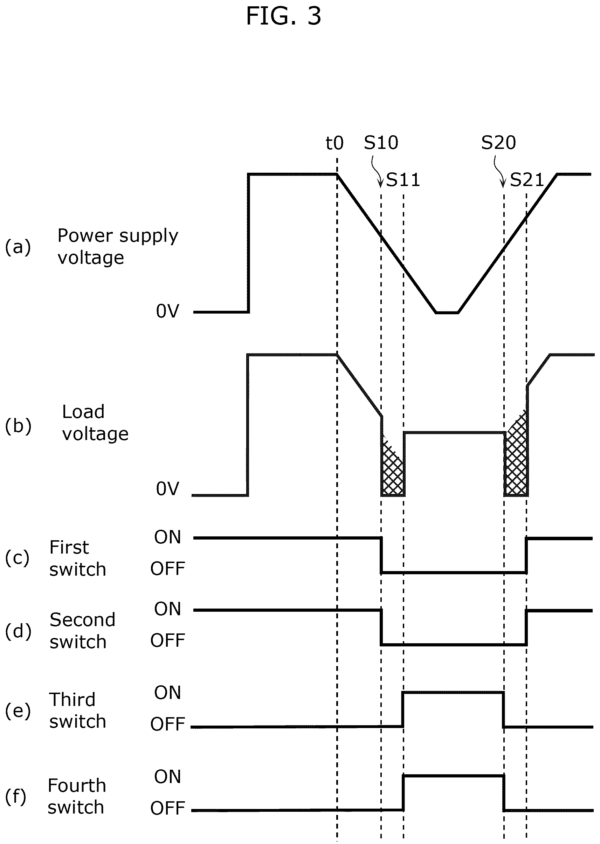

   FIG. 3 is a timing chart showing operational states of each of components of the backup power supply device according to the reference example during operation shown in FIG. 2.
[FIG. 4]

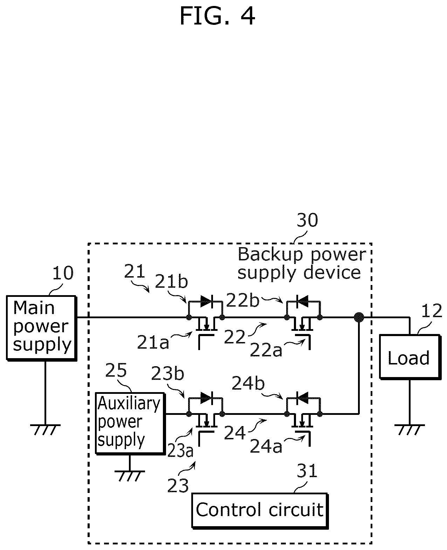

   FIG. 4 is a circuit diagram showing a structure of a backup power supply device according to an embodiment.
[FIG. 5]

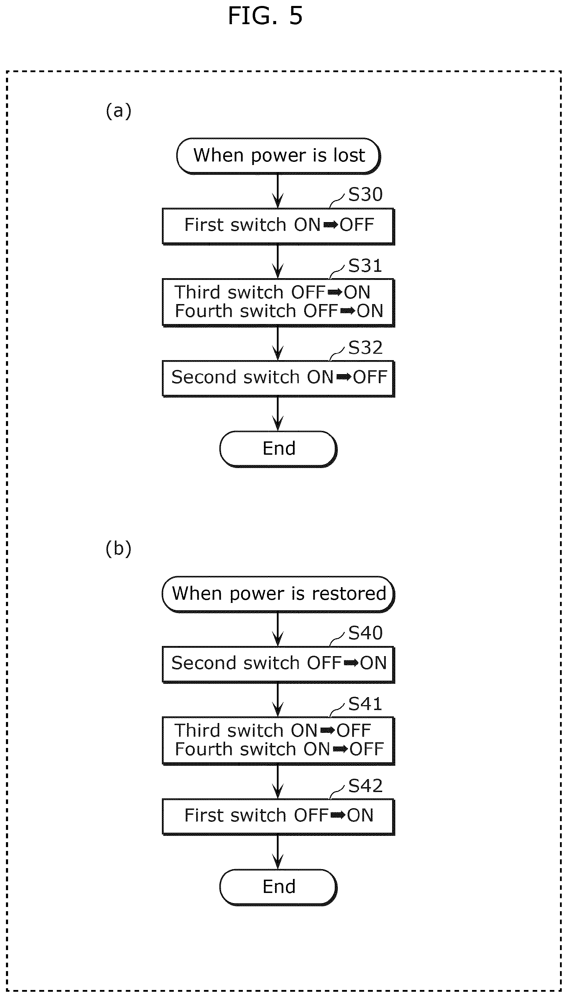

   FIG. 5 is a flow chart showing an operation of the backup power supply according to the embodiment switching a power supply that supplies a DC voltage to the load.
[FIG. 6]

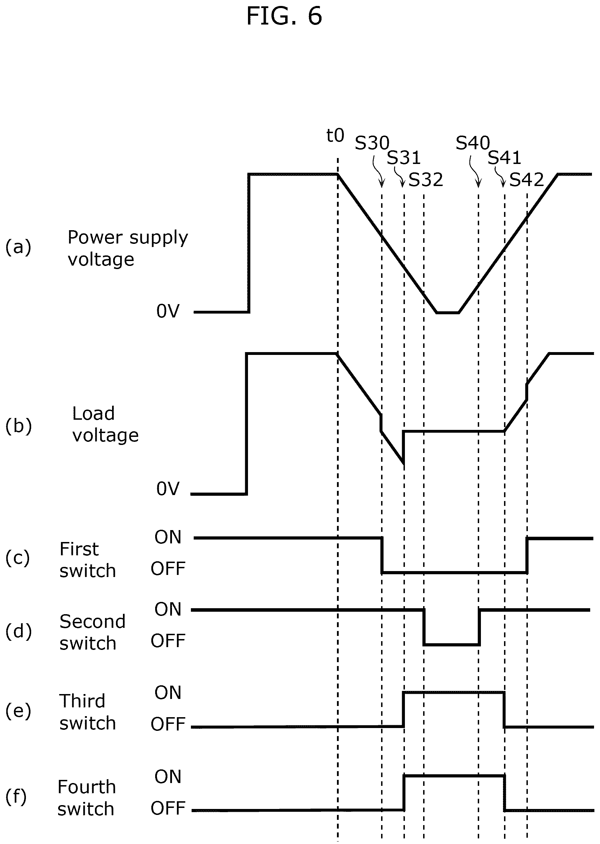

   FIG. 6 is a timing chart showing the operational states of each component of the backup power supply device according to the embodiment during the operation shown in FIG. 5.
[FIG. 7]

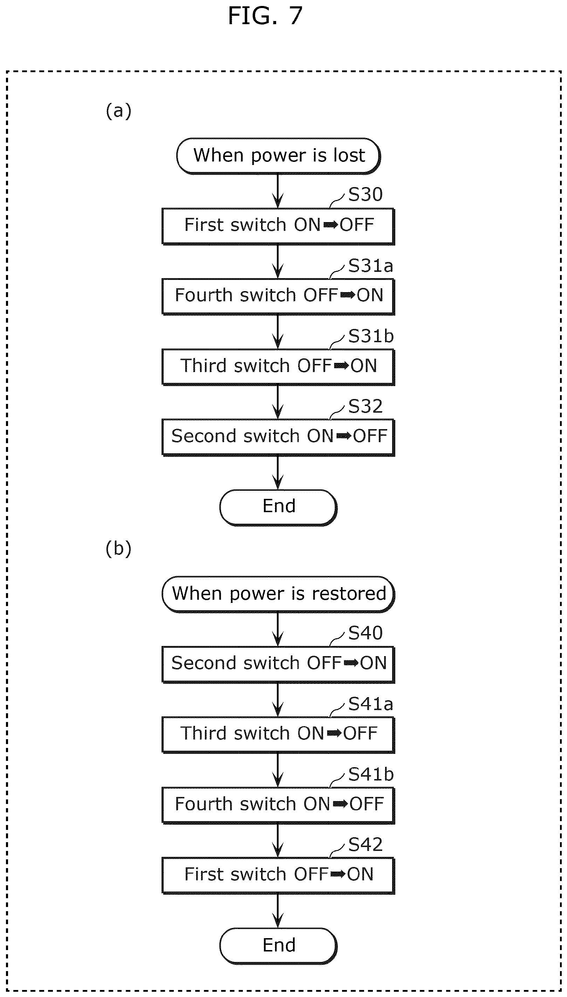

   FIG. 7 is a flow chart showing a control procedure according to a variation of the embodiment.
[FIG. 8]

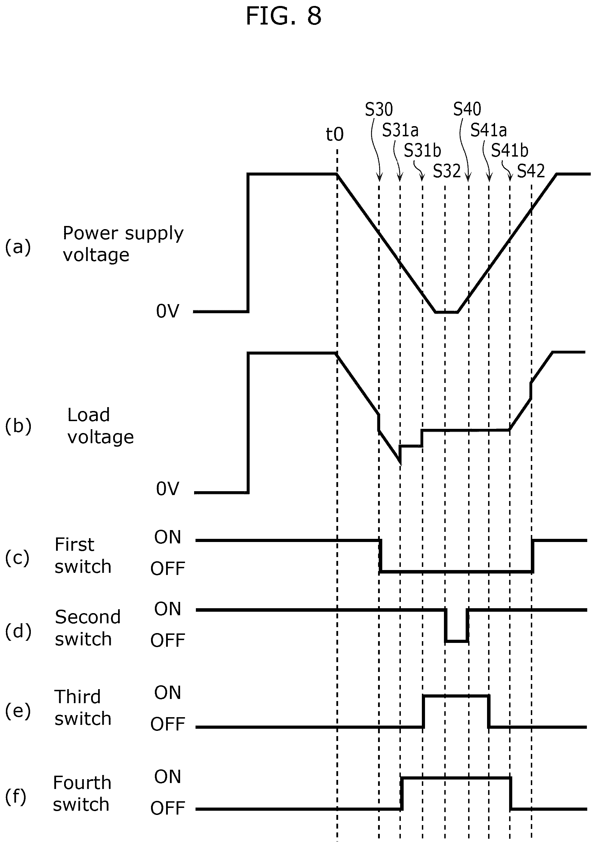

   FIG. 8 is a timing chart showing the operational states of each component of the backup power supply device in the control procedure according to the variation shown in FIG. 7.
[FIG. 9]

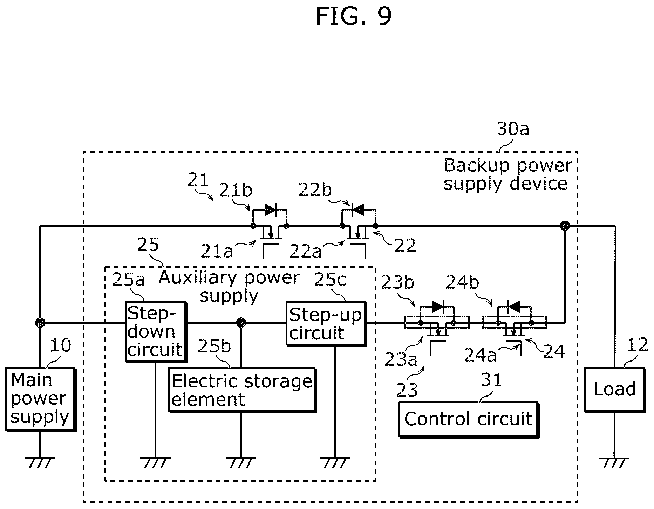

   FIG. 9 is a circuit diagram showing a configuration of a backup power supply device according to a first implementation example.
[FIG. 10]

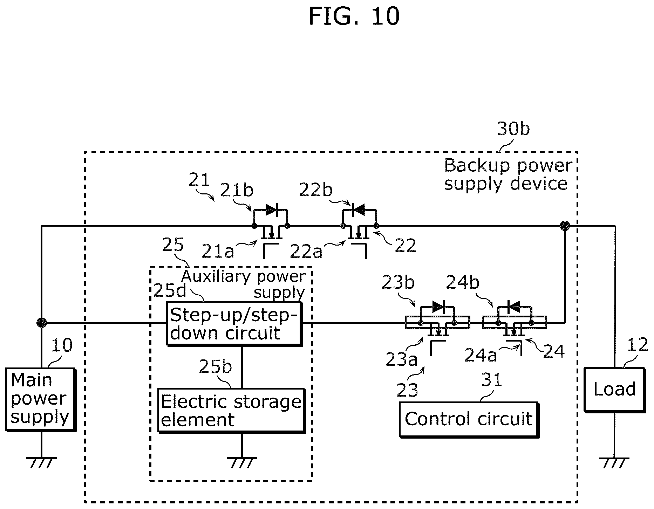

   FIG. 10 is a circuit diagram showing a configuration of a backup power supply device according to a second implementation example.
[FIG. 11]

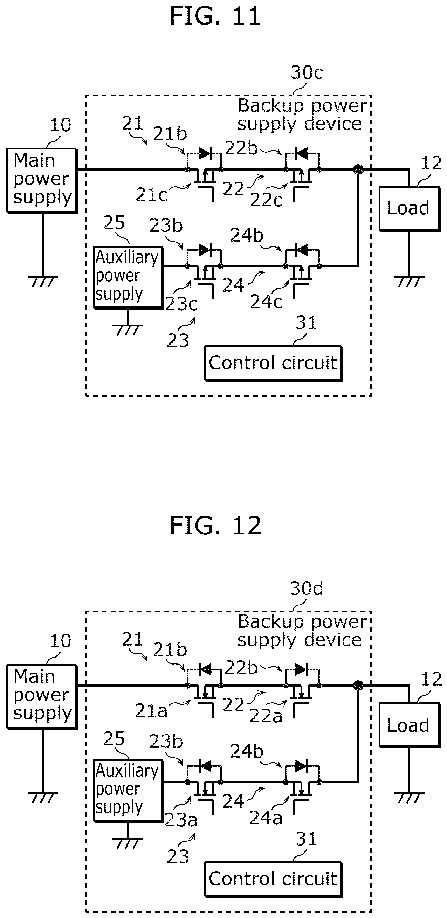

   FIG. 11 is a circuit diagram showing a configuration of a backup power supply device according to a variation of the embodiment.
[FIG. 12]
   FIG. 12 is a circuit diagram showing a configuration of a backup power supply device according to another variation of the embodiment.

### [Description of Embodiment]

### (Knowledge obtained by Inventors)

First, before explaining an embodiment, the problems of the present disclosure will be explained as knowledge obtained by the inventors of the present disclosure with reference to the drawings.

FIG. 1 is a circuit diagram showing a configuration of backup power supply device 20 according to a reference example. This diagram illustrates not only backup power supply device 20, but also main power supply 10 and load 12. Main power supply 10 is a DC voltage source for supplying a DC voltage to load 12, and is, for example, a power supply (battery) provided in a vehicle. Load 12 is an electrical load that receives the supply of the DC voltage, and is, for example, an electronic control unit (ECU) that operates in a vehicle by receiving the DC voltage from main power supply 10 or the like.

Backup power supply device 20 is a power supply that backs up the supply of the DC voltage to load 12 by main power supply 10, and includes first switch 21, second switch 22, third switch 23, fourth switch 24, auxiliary power supply 25, and control circuit 26.

Auxiliary power supply 25 is a DC voltage source for supplying a DC voltage to load 12 in place of main power supply 10, and for example, an electric storage element that is charged by a current supplied from main power supply 10 or a power supply circuit obtained by connecting such an electric storage element and a step-up circuit.

First switch 21 is a switch that is inserted into a path connecting main power supply 10 and load 12, and turns on and off the supply of the DC voltage from main power supply 10 to load 12. First switch 21 includes first MOSFET 21a and first diode 21b which is a parasitic diode of first MOSFET 21a and provided in a direction in which a current supplied from main power supply 10 flows to second switch 22.

Second switch 22 is a switch that is inserted into a path connecting first switch 21 and load 12, and turns on and off the supply of the DC voltage to load 12 through first switch 21. Second switch 22 includes second MOSFET 22a and second diode 22b which is a parasitic diode of second MOSFET 22a and provided in a direction in which a current flows from load 12 to first switch 21.

Third switch 23 is a switch that is inserted into a path connecting auxiliary power supply 25 and load 12, and turns on and off the supply of the DC voltage from auxiliary power supply 25 to load 12. Third switch 23 includes third MOSFET 23a and third diode 23b which is a parasitic diode of third MOSFET 23a and provided in a direction in which a current supplied from auxiliary power supply 25 flows to fourth switch 24.

Fourth switch 24 is a switch that is inserted into a path connecting third switch 23 and load 12, and turns on and off the supply of the DC voltage to load 12 through third switch 23. Fourth switch 24 includes fourth MOSFET 24a and fourth diode 24b which is a parasitic diode of fourth MOSFET 24a and provided in a direction in which a current flows from load 12 to third switch 23.

It should be noted that in the present reference example, first MOSFET 21a, second MOSFET 22a, third MOSFET 23a, and fourth MOSFET 24a are all N-channel MOS transistors.

Control circuit 26 is a circuit that controls first switch 21, second switch 22, third switch 23, and fourth switch 24, and includes, for example, a memory for storing programs, a processor for executing programs, an input/output circuit, and the like.

FIG. 2 is a flow chart showing an operation of backup power supply device 20 according to the reference example shown in FIG. 1 switching a power supply that supplies a DC voltage to load 12 (that is, a control method for backup power supply device 20). More specifically, (a) in FIG. 2 shows a flow chart of a case in which the power supply that performs the supply of the DC voltage to load 12 is switched from main power supply 10 to auxiliary power supply 25. Such a case corresponds to a case in which main power supply 10 has caused a power failure, such as a battery failure. In addition, (b) in FIG. 2 shows a flow chart of a case in which the power supply that performs the supply of the DC voltage to load 12 is switched from auxiliary power supply 25 to main power supply 10. Such a case corresponds to, for example, a case in which main power supply 10 that had lost its power has recovered.

As shown (a) in FIG. 2, when the power supply that performs the supply of the DC voltage to load 12 is switched from main power supply 10 to auxiliary power supply 25, in the state where first switch 21 and second switch 22 are on, and third switch 23 and fourth switch 24 are off, control circuit 26 first turns off first switch 21 and second switch 22 from on at the same time (S10), and then turns on third switch 23 and fourth switch 24 from off at the same time (S11).

As shown (b) in FIG. 2, when the power supply that performs the supply of the DC voltage to load 12 is switched from auxiliary power supply 25 to main power supply 10, in the state where first switch 21 and second switch 22 are off, and third switch 23 and fourth switch 24 are on, control circuit 26 first turns off third switch 23 and fourth switch 24 from on at the same time (S20), and then turns on first switch 21 and second switch 22 from off at the same time (S21).

FIG. 3 is a timing chart showing the operational states of each of components of backup power supply device 20 according to the reference example during operation shown in FIG. 2. More specifically, (a) in FIG. 3 shows an output voltage of main power supply 10 ("power supply voltage"), (b) in FIG. 3 shows the voltage supplied to load 12 ("load voltage"), and (c) to (f) in FIG. 3 show the on/off states of first switch 21, second switch 22, third switch 23, and fourth switch 24, respectively.

In the timing shown in FIG. 3, "t0" is the time point where main power supply 10 begins to lose power, and "S10", "S11", "S20", and "S21" are the time points where steps S10 and S11 in (a) in FIG. 2, and steps S20 and S21 in (b) in FIG. 2 are executed, respectively. It should be noted that just before time point S20, main power supply 10 recovers from the power failure.

As shown in FIG. 3, from time point t0, the "power supply voltage" and "load voltage" begin to fall due to a power failure of main power supply 10, at time point S10, to switch the power supply that supplies the DC voltage to load 12 from main power supply 10 to auxiliary power supply 25, first, first switch 21 and second switch 22 are turned off from on at the same time, and then at time point S11, third switch 23 and fourth switch 24 are turned on from off at the same time. Accordingly, the power supply that supplies the DC voltage to load 12 is switched from main power supply 10 to auxiliary power supply 25.

Here, focusing on time point S10 to time point S11 (that is, from time point S10 to just before time point S11), during this period, the voltage supply to load 12 is cut off because all four switches (first switch 21, second switch 22, third switch 23, and fourth switch 24) are in the off state, and if a load-side ground fault (that is, a state in which load 12 has an anomalously low impedance) or the like occurs, the voltage supplied to load 12 may drop significantly to zero voltage or the like, depending on the extent of the fault. Cross-hatching at time points S10 to S11 of the "load voltage" shown in (b) in FIG. 3 indicates the possibility thereof.

In addition, at time point S20, main power supply 10 that had lost its power has been restored, and in order to switch the power supply that supplies the DC voltage to load 12 from auxiliary power supply 25 to main power supply 10, third switch 23 and fourth switch 24 are turned off from on at the same time, and then at time point S21, first switch 21 and second switch 22 are turned on from off at the same time. Accordingly, the power supply that supplies the DC voltage to load 12 is switched from auxiliary power supply 25 to main power supply 10.

Here, focusing on time point S20 to time point S21 (that is, from time point S20 to just before time point S21), during this period, the voltage supply to load 12 is cut off because all four switches (first switch 21, second switch 22, third switch 23, and fourth switch 24) are in the off state, and if a load-side ground fault (that is, a state in which load 12 has an anomalously low impedance) or the like occurs, the voltage supplied to load 12 may drop significantly to zero voltage or the like, depending on the extent of the fault. Cross-hatching at time points S20 to S21 of the "load voltage" shown in (b) in FIG. 3 indicates the possibility thereof.

In this way, in backup power supply device 20 according to the reference example, when the power supply that supplies the DC voltage to load 12 is switched, there is an instant when all four switches (first switch 21, second switch 22, third switch 23, and fourth switch 24) are turned off, so that when the ground fault on the load side, or the like occurs, the voltage supplied to load 12 is temporarily cut off, and there is a possibility that the voltage supplied to load 12 will drop significantly to zero voltage or the like. Even if it is temporary, loads that cause fatal problems due to the supply voltage drop to zero are not uncommon, and if such a situation were to occur, the significance of having a backup power supply device would be lost.

Therefore, the inventors have come up with a backup power supply device that can prevent the supply voltage to load 12 from being cut off when switching the power supply by utilizing the fact that first switch 21 includes first diode 21b provided in the direction in which a current supplied by main power supply 10 flows to load 12 when switching the power supply that supplies the DC voltage to load 12, and by performing a control procedure to avoid all four switches (first switch 21, second switch 22, third switch 23 and fourth switch 24) from being turned off at the same time.

### [Embodiment]

Hereinafter, the embodiments of the present disclosure will be described in detail with reference to the drawings. It should be noted that all of the embodiments described below represent specific examples of the present disclosure. The numerical values, shapes, materials, components, arrangement positions and connection forms of the components, steps, order of steps, and the like shown in the following embodiments are examples, and are not intended to limit the present disclosure. In addition, each figure is not necessarily exactly illustrated. In each figure, the same reference numerals are assigned to substantially the same configurations, and duplicate descriptions are omitted or simplified. In addition, "A and B are connected" means that A and B are electrically connected, and it includes not only a case where A and B are directly connected, but also a case where A and B are indirectly connected with other circuit elements interposed therebetween.

FIG. 4 is a circuit diagram showing the configuration of backup power supply device 30 according to the embodiment. This figure also illustrates not only backup power supply device 30, but also main power supply 10 and load 12, similar to FIG. 1.

Backup power supply device 30 is a power supply that backs up the supply of the DC voltage to load 12 by main power supply 10, and includes first switch 21, second switch 22, third switch 23, fourth switch 24, auxiliary power supply 25, and control circuit 31. The configuration that differs from backup power supply device 20 according to the reference example shown in FIG. 1 is control circuit 31. Hereinafter, the differences from backup power supply device 20 according to the reference example will be mainly explained.

Control circuit 31 is a circuit that controls first switch 21, second switch 22, third switch 23, and fourth switch 24, and includes, for example, a memory for storing programs, a processor for executing programs, an input/output circuit, and the like. Unlike control circuit 26 included in backup power supply device 20 according to the reference example, control circuit 31 prevents the supply voltage to load 12 from being cut off when switching the power supply by utilizing the fact that first switch 21 includes first diode 21b provided in the direction in which a current supplied by main power supply 10 flows to load 12 when switching the power supply that supplies the DC voltage to load 12, and by performing a control procedure to avoid all four switches (first switch 21, second switch 22, third switch 23 and fourth switch 24) from being turned off at the same time.

It should be noted that similar to PTL 1, backup power supply device 30 includes four switches (first switch 21, second switch 22, third switch 23, and fourth switch 24), so that even if an anomaly such as a short circuit failure occurs in either one of main power supply 10 or auxiliary switch 24, it is possible to cut off the flow of current into the path from the other power supply.

FIG. 5 is a flow chart showing the operation of backup power supply device 30 according to the embodiment shown in FIG. 4 switching the power supply that supplies the DC voltage to load 12 (that is, a control method for backup power supply device 30). More specifically, (a) in FIG. 5 shows a flow chart of a case in which the power supply that supplies the DC voltage to load 12 is switched from main power supply 10 to auxiliary power supply 25. Such a case corresponds to, for example, a case in which main power supply 10 loses power, such as a battery failure, and corresponds to (a) in FIG. 2 of backup power supply device 20 according to the reference example. In addition, (b) in FIG. 5 shows a flow chart of a case in which the power supply that supplies the DC voltage to load 12 is switched from auxiliary power supply 25 to main power supply 10. Such a case corresponds to, for example, a case in which main power supply 10 that had lost its power has recovered, and corresponds to (b) in FIG. 2 of backup power supply device 20 according to the reference example.

As shown in (a) in FIG. 5, when the power supply that supplies the DC voltage to load 12 is switched from main power supply 10 to auxiliary power supply 25, in a state where first switch 21 and second switch 22 are on, and third switch 23 and fourth switch 24 are off, control circuit 31 first turns off first switch 21 from on (S30), next turns on third switch 23 and fourth switch 24 from off at the same time (S31), and then turns off second switch 22 from on (S32). Compared to (a) in FIG. 2 according to the reference example, step S10 in (a) in FIG. 2 corresponds to the flow separated into step S30 and step S32 in (a) in FIG. 5.

As shown in (b) in FIG. 5, when the power supply that supplies the DC voltage to load 12 is switched from auxiliary power supply 25 to main power supply 10, in a state where first switch 21 and second switch 22 are off, and third switch 23 and fourth switch 24 are on, control circuit 31 first turns on second switch 22 from off (S40), next turns off third switch 23 and fourth switch 24 from on at the same time (S41), and then turning on first switch 21 from off (S42). Compared to (b) in FIG. 2 according to the reference example, step S20 in (b) in FIG. 2 corresponds to the flow separated into steps S40 and S42 in (b) in FIG. 5.

FIG. 6 is a timing chart showing the operational states of each of the components of backup power supply device 30 according to the embodiment during operation shown in FIG. 5. (a) to (f) in FIG. 6 show timings at the same locations as those in (a) to (f) in FIG. 3.

At the timing shown in FIG. 6, "t0" is the time point where main power supply 10 begins to lose power, and "S30" to "S32" and "S40" to "S42" are the time points where steps S30 to S32 in (a) in FIG. 5, and steps S40 and S42 in (b) in FIG. 5 are executed, respectively. It should be noted that just before time point S40, main power supply 10 recovers from the power failure.

As shown in FIG. 6, from time point t0, the "power supply voltage" and "load voltage" begin to fall due to a power failure of main power supply 10, at time point S30, to switch the power supply that supplies the DC voltage to load 12 from main power supply 10 to auxiliary power supply 25, first, first switch 21 is turned off from on, then at time point S31, third switch 23 and fourth switch 24 are turned on from off at the same time, and then at time point S32, second switch 22 is turned off from on. Accordingly, the power supply that supplies the DC voltage to load 12 is switched from main power supply 10 to auxiliary power supply 25.

Here, focusing on time point S30 to time point S31 (that is, from time point S30 to just before time point S31), first switch 21, third switch 23 and fourth switch 24 are off during this period, but second switch 24 is kept on, so that a state in which a current is supplied from main power supply 10 through first diode 21b of first switch 21 through second switch 22 to load 12 is maintained. However, a voltage drop occurs at first diode 21b. As a result, as shown in the "load voltage" at time points S30 to S31 in FIG. 6, the voltage of the "load voltage" decreases by the amount of voltage drop at first diode 21b, but since the current supply from the main power supply 10 is maintained, even if a load-side ground fault (that is, a state in which load 12 has an anomalously low impedance) or the like occurs, further large voltage drops are suppressed.

It should be noted that at time point S31, third switch 23 and fourth switch 24 are turned on from off at the same time, and accordingly, the voltage supply from auxiliary power supply 25 to load 12 is started, and the "load voltage" rises, but since second switch 22 is kept on, a reverse bias is applied to first diode 21b of first switch 21, which prevents current from flowing from auxiliary power supply 25 to main power supply 10.

Furthermore, at time point S32, second switch 22 is turned off from on, but since no current was flowing in second switch 22 in the immediately preceding state, no variation in the "load voltage" occurs in particular.

In addition, at time point S40, main power supply 10 that had lost its power has been restored, and in order to switch the power supply that supplies the DC voltage to load 12 from auxiliary power supply 25 to main power supply 10, first second switch 22 is turned on from off, next at time point S41, third switch 23 and fourth switch 24 are turned off from on at the same time, and then at time point S42, first switch 21 is turned on from off. Accordingly, the power supply that supplies the DC voltage to load 12 is switched from auxiliary power supply 25 to main power supply 10.

Here, at time point S40, only second switch 22 of first switch 21 and second switch 22 is turned on from off, but since third switch 23 and fourth switch 24 are maintained on, the voltage supply from auxiliary power supply 25 to load 12 is maintained, and a reverse bias is applied to first diode 21b of first switch 21, which is off. This state is the same as in time point S32, and no variation in the "load voltage" occurs in particular.

In addition, when focusing on time points S41 to S42 (that is, from time point S41 to just before time point S42), during this period, third switch 23 and fourth switch 24 are turned off from on at the same time in a state where second switch 22 is kept on, thereby supplying current from main power supply 10 to load 12 through first diode 21b of first switch 21, which is off, and second switch 22. However, a voltage drop occurs at first diode 21b. As a result, as shown in the "load voltage" at time points S41 to S42 in FIG. 6, the "load voltage" rises to a voltage that is reduced from the output voltage of the main power supply 10 by the voltage drop at first diode 21b, and since the current supply from the main power supply 10 is maintained, even if a load-side ground fault (that is, a state in which load 12 has an anomalously low impedance) or the like occurs, further large voltage drops are suppressed.

It should be noted that at time point S42, first switch 21 is turned on from off, so that the voltage drop at first diode 21b of first switch 21 is not generated, and the voltage supply from main power supply 10 to load 12 through first switch 21 and second switch 22 is resumed.

As described above, backup power supply device 30 according to the embodiment can prevent the supply voltage to load 12 from being cut off when switching the power supply by utilizing the fact that first switch 21 includes first diode 21b provided in the direction in which a current supplied by main power supply 10 flows to load 12 when switching the power supply that supplies the DC voltage to load 12, and by performing a control procedure to avoid all four switches (first switch 21, second switch 22, third switch 23 and fourth switch 24) from being turned off at the same time.

It should be noted that in the embodiment described above, when the power supply that supplies the DC voltage to load 12 is switched, third switch 23 and fourth switch 24 are turned on from off or turned off from on at the same time, but they may be turned on from off or turned off from on in sequence. Hereinafter, the control procedure in this case will be described below as the control procedure according to a variation of the embodiment.

FIG. 7 is a flow chart showing the control procedure (that is, the control method for backup power supply device 30) according to a variation of the embodiment. More specifically, (a) in FIG. 7 shows a flow chart of the control procedure according to a variation of the case in which the power supply that supplies the DC voltage to load 12 is switched from main power supply 10 to auxiliary power supply 25. (b) in FIG. 7 shows a flow chart of the control procedure according to the variation of the case in which the power supply that supplies the DC voltage to load 12 is switched from auxiliary power supply 25 to main power supply 10.

As shown in (a) in FIG. 7, in the case where the power supply that supplies the DC voltage to load 12 is switched from main power supply 10 to auxiliary power supply 25, the control procedure according to the variation corresponds to the one in which step S31 (turning on third switch 23 and fourth switch 24 from off at the same time) in the flow chart shown in (a) in FIG. 5 according to the embodiment is separated into two steps S31a (turning on fourth switch 24 from off) and step S31b (turning on third switch 23 from off), which are performed in sequence.

In addition, as shown in (b) in FIG. 7, in the case where the power supply that supplies the DC voltage to load 12 is switched from auxiliary power supply 25 to main power supply 10, the control procedure according to the variation corresponds to the one in which step S41 (turning off third switch 23 and fourth switch 24 from on at the same time) in the flow chart shown in (b) in FIG. 5 according to the embodiment is separated into two steps S41a (turning off third switch 23 from on) and step S41b (turning off fourth switch 24 from on), which are performed in sequence.

FIG. 8 is a timing chart showing the operational states of each of components of backup power supply device 30 in the control procedure according to the variation shown in FIG. 7. (a) to (f) in FIG. 8 show timings at the same locations as those in (a) to (f) in FIG. 3. At the timing shown in FIG. 8, "t0" is the time when main power supply 10 begins to lose power, and "S30" to "S32" and "S40" to "S42" are the time points where steps S30 to S32 in (a) in FIG. 7, and steps S40 and S42 in (b) in FIG. 7 are executed, respectively. It should be noted that just before time point S40, main power supply 10 recovers from the power failure.

At time point S31a, only fourth switch 24 of third switch 23 and fourth switch 24 is turned on from off, so that the current supply from auxiliary power supply 25 through third diode 23b of third switch 23 through fourth switch 24 to load 12 is started, and as shown in the "load voltage" at time points S31a to S31b in FIG. 8, the "load voltage" rises from the previous voltage, and becomes a voltage reduced from the output voltage of auxiliary power supply 25 by the voltage drop across third diode 23b.

After that, at time point S31b, third switch 23 is also turned on from off following fourth switch 24, so that it is in the same state as at time point S31 in FIG. 6 according to the embodiment.

In addition, at time point S41a, only third switch 23 of third switch 23 and fourth switch 24 is turned off from on, so that the higher voltage out of the voltage that has been reduced from the output voltage of auxiliary power supply 25 by the voltage drop across third diode 23b and the voltage that has been reduced from the output voltage of main power supply 10 by the voltage drop across first diode 21b is supplied to load 12.

After that, at time point S41b, fourth switch 24 is also turned off from on following third switch 23, and therefore it is in the same state as at time point S41 in FIG. 6 according to the embodiment.

Here, at time points S31a to S31b and time points S41a to S41b, first switch 21 close to main power supply 10 is off, third switch 23 close to auxiliary power supply 25 is off, and second switch 22 and fourth switch 24 that are close to load 12 are on, so that the higher voltage out of the voltage that has been reduced from the output voltage of main power supply 10 by the voltage drop across first diode 21b and the voltage that has been reduced from the output voltage of auxiliary power supply 25 by the voltage drop across third diode 23b is supplied to load 12, so that even if the output voltage of main power supply 10 varies violently and drops significantly, it is ensured that load 12 will not drop below the voltage supplied by the auxiliary power supply 25.

Next, two specific implementation examples of auxiliary power supply 25 included in backup power supply device 30 according to the embodiment described above are shown.

FIG. 9 is a circuit diagram showing the configuration of backup power supply device 30a according to the first implementation example. Backup power supply device 30a includes auxiliary power supply 25 including step-down circuit 25a, electric storage element 25b, and step-up circuit 25c as auxiliary power supply 25 included in backup power supply device 30 according to the embodiment described above.

Step-down circuit 25a is a circuit that steps down the DC voltage supplied from main power supply 10 to charge electric storage element 25b, and is a step-down DC/DC converter including, for example, a switching element such as a MOSFET, an inductor, a diode, a capacitor, and the like, and operates under control by control circuit 31.

Electric storage element 25b is a capacitor such as an electric double layer capacitor.

Step-up circuit 25c is a circuit that steps up the DC voltage output from electric storage element 25b and supplies the stepped-up the DC voltage to load 12 via third switch 23 and fourth switch 24, and is a step-up DC/DC converter including, for example, a switching element such as a MOSFET, an inductor, a diode, a capacitor, and the like, and operates under control by control circuit 31.

According to backup power supply device 30a according to such a first implementation example, auxiliary power supply 25 includes electric storage element 25b that is charged from main power supply 10, so that it does not need to have a power generation function. In addition, since the DC voltage output from electric storage element 25b is stepped-up by step-up circuit 25c and supplied to load 12, auxiliary power supply 25 can be realized by electric storage element 25b, which can maintain a voltage lower than main power supply 10.

FIG. 10 is a circuit diagram showing the configuration of backup power supply device 30b according to the second implementation example. Backup power supply device 30b includes auxiliary power supply 25 including step-up/step-down circuit 25d and electric storage element 25b, as auxiliary power supply 25 included in backup power supply device 30 according to the embodiment described above.

The step-up/step-down circuit 25d is a circuit that includes a function of stepping down the DC voltage supplied from main power supply 10 to charge electric storage element 25b, and a function of stepping up the DC voltage output from electric storage element 25b to supply the DC voltage after stepping up to load 12 through third switch 23 and fourth switch 24, which is, for example, a step-up/step-down DC/DC converter including a switching element such as a MOSFET, an inductor, a diode, a capacitor, and the like, and operates under control by control circuit 31. Step-up/step-down circuit 25d, for example, under the control by control circuit 31, steps down the DC voltage supplied from main power supply 10 to charge electric storage element 25b when main power supply 10 is supplying the DC voltage to load 12 and the voltage of electric storage element 25b is lower than a predetermined value, while when the power supply that supplies the DC voltage to load 12 is switched from main power supply 10 to auxiliary power supply 25, step-up/step-down circuit 25d steps up the DC voltage output from electric storage element 25b to supply the stepped-up DC voltage to load 12 via third switch 23 and fourth switch 24.

According to backup power supply device 30b according to the second implementation example, compared to backup power supply device 30a according to the first implementation example, the same functions as backup power supply device 30a according to the first implementation example can be realized with an auxiliary power supply 25 with a smaller circuit size.

It should be noted that in the embodiment, variation, and implementation examples described above, first MOSFET 21a, second MOSFET 22a, third MOSFET 23a, and fourth MOSFET 24a are all N-channel MOS transistors, but instead, may be P-channel MOS transistors.

FIG. 11 is a circuit diagram showing a configuration of backup power supply device 30c according to a variation of the embodiment. Here, a configuration of backup power supply device 30c including a configuration in which four N-channel MOS transistors (first MOSFET 21a, second MOSFET 22a, third MOSFET 23a, and fourth MOSFET 24a) included in backup power supply device 30 according to the embodiment shown in FIG. 4 are replaced with P-channel MOS transistors (first MOSFET 21c, second MOSFET 22c, third MOSFET 23c, and fourth MOSFET 24c) is shown.

Backup power supply device 30c according to such a variation operates in the same control procedure as the backup power supply devices according to the embodiment, variation, and implementation examples. However, backup power supply device 30c including P-channel MOS transistors does not require a bias voltage higher than the voltage of main power supply 10 as the bias voltage applied to the gate of each transistor, compared to the backup power supply device including N-channel MOS transistors, so that it has a merit that control circuit 31 and the like are simplified.

As described above, backup power supply device 30 and the like according to the embodiment include a backup power supply device that backs up a supply of a DC voltage from main power supply 10 to load 12, the backup power supply device including: first switch 21 that is inserted into a path connecting main power supply 10 and load 12, and turns on and off the supply of the DC voltage from main power supply 10 to load 12; second switch 22 that is inserted into a path connecting first switch 21 and load 12, and turns on and off the supply of the DC voltage to load 12 via first switch 21; auxiliary power supply 25 for supplying a DC voltage to load 12; third switch 23 that is inserted into a path connecting auxiliary power supply 25 and load 12, and turns on and off the supply of the DC voltage from auxiliary power supply 25 to load 12; fourth switch 24 that is inserted into a path connecting third switch 23 and load 12, and turns on and off the supply of the DC voltage to load 12 via third switch 23; and control circuit 31 that controls first switch 21, second switch 22, third switch 23, and fourth switch 24.

Accordingly, when the power supply that supplies the DC voltage to load 12 is switched from main power supply 10 to auxiliary power supply 25, in a state in which first switch 21 and second switch 22 are on, and third switch 23 and fourth switch 24 are off, control circuit 31 can perform first step S30 in which first switch 21 is turned off, second step S31 in which third switch 23 and fourth switch 24 are turned on after first step S30, and third step S32 in which second switch 22 is turned off after second step S31.

Therefore, when the power supply that supplies the DC voltage to load 12 is switched from main power supply 10 to auxiliary power supply 25, the fact that first switch 21 includes first diode 21b provided in the direction in which a current supplied by main power supply 10 flows to load 12 is utilized and a control procedure to avoid all four switches (first switch 21, second switch 22, third switch 23 and fourth switch 24) from being turned off at the same time is performed, so that the supply voltage to load 12 is prevented from being cut off when switching the power supply.

Here, third switch 23 includes third diode 23b provided in a direction in which the current supplied from auxiliary power supply 25 flows to fourth switch 24 when third switch 23 is off, and in second step S31, after turning on fourth switch 24 (step S31a), third switch 23 may be turned on (step S31b). Accordingly, from time point S31a to time point S31b, the higher voltage out of the voltage that has been reduced from the output voltage of main power supply 10 by the voltage drop across first diode 21b and the voltage that has been reduced from the output voltage of auxiliary power supply 25 by the voltage drop across third diode 23b is supplied to load 12, so that even if the output voltage of main power supply 10 varies violently and drops significantly, it is ensured that load 12 will not drop below the voltage supplied by the auxiliary power supply 25.

In addition, when the power supply that supplies the DC voltage to load 12 is switched from auxiliary power supply 25 to main power supply 10, in a state where first switch 21 and second switch 22 are off, and third switch 23 and fourth switch 24 are on, control circuit 31 further executes: fourth step S40 of turning on second switch 22; fifth step S41 of turning off third switch 23 and fourth switch 24 after fourth step S40; and sixth step S42 of turning on first switch 21 after fifth step S41.

Accordingly, when the power supply that supplies the DC voltage to load 12 is switched from auxiliary power supply 25 to main power supply 10, the fact that first switch 21 includes first diode 21b provided in the direction in which a current supplied by main power supply 10 flows to load 12 is utilized and a control procedure to avoid all four switches (first switch 21, second switch 22, third switch 23 and fourth switch 24) from being turned off at the same time is performed, so that the supply voltage to load 12 is prevented from being cut off when switching the power supply.

Here, third switch 23 includes third diode 23b provided in a direction in which a current supplied from auxiliary power supply 25 flows to fourth switch 24 when third switch 23 is off, and in fifth step S41, after third switch 23 is turned off (step S41a), fourth switch 24 may be turned off (step S41b). Accordingly, from time point S41a to time point S41b, the higher voltage out of the voltage that has been reduced from the output voltage of main power supply 10 by the voltage drop across first diode 21b and the voltage that has been reduced from the output voltage of auxiliary power supply 25 by the voltage drop across third diode 23b is supplied to load 12, so that even if the output voltage of main power supply 10 varies violently and drops significantly, it is ensured that load 12 will not drop below the voltage supplied by the auxiliary power supply 25.

In addition, first switch 21 may include first diode 21b provided in a direction in which a current supplied from main power supply 10 flows to second switch 22 when first switch 21 is off, second switch 22 may include second diode 22b provided in a direction in which a current flows from load 12 to first switch 21 when second switch 22 is off, third switch 23 may include third diode 23b provided in a direction in which a current supplied from auxiliary power supply 25 flows to fourth switch 24 when third switch 23 is off, and fourth switch 24 may include fourth diode 24b provided in a direction in which a current flows from load 12 to third switch 23 when fourth switch 24 is off. Accordingly, first diode 21b included in first switch 21 and second diode 22b included in second switch 22 have the opposite direction of the current flowing, and third diode 23b included in third switch 23 and fourth diode 24b included in fourth switch 24 have the opposite direction of the current flowing, so that first switch 21 and second switch 22 can cut off the current flowing in both directions.

In addition, first switch 21, second switch 22, third switch 23, and fourth switch 24 are MOSFETs, and first diode 21b, second diode 22b, third diode 23b, and fourth diode 24b may be parasitic diodes of the MOSFETs. This allows backup power supply device 30 and the like to be realized with a small number of components.

In addition, auxiliary power supply 25 may include electric storage element 25b that is charged with a current supplied from main power supply 10. Auxiliary power supply 25 may further include step-down circuit 25a that steps down the DC voltage supplied from main power supply 10 to charge electric storage element 25b; and step-up circuit 25c that steps up a DC voltage output from electric storage element 25b and supplies the DC voltage that has been stepped up to load 12 via third switch 23 and fourth switch 24.

Accordingly, auxiliary power supply 25 includes electric storage element 25b that is charged from main power supply 10, so that it does not need to have a power generation function. In addition, since the DC voltage output from electric storage element 25b is stepped-up by step-up circuit 25c and supplied to load 12, auxiliary power supply 25 can be realized by electric storage element 25b, which can maintain a voltage lower than main power supply 10.

In addition, the control method for backup power supply device 30 according to the embodiment is a control method for backup power supply device 30 that backs up a supply of a DC voltage from main power supply 10 to load 12, the backup power supply device including: first switch 21 that is inserted into a path connecting main power supply 10 and load 12, and turns on and off the supply of the DC voltage from main power supply 10 to load 12; second switch 22 that is inserted into a path connecting first switch 21 and load 12, and turns on and off the supply of the DC voltage to load 12 via first switch 21; auxiliary power supply 25 for supplying a DC voltage to load 12; third switch 23 that is inserted into a path connecting auxiliary power supply 25 and load 12, and turns on and off the supply of the DC voltage from auxiliary power supply 25 to load 12; and fourth switch 24 that is inserted into a path connecting third switch 23 and load 12, and turns on and off the supply of the DC voltage to load 12 via third switch 23, wherein when a power supply that performs the supply of the DC voltage to load 12 is switched from main power supply 10 to auxiliary power supply 25, in a state where first switch 21 and second switch 22 are on, and third switch 23 and fourth switch 24 are off, the control method for backup power supply device 30 includes: first step S30 of turning off first switch 21; second step S31 of turning on third switch 23 and fourth switch 24 after first step S30; and third step S32 of turning off second switch 22 after second step S31.

Accordingly, when the power supply that supplies the DC voltage to load 12 is switched from main power supply 10 to auxiliary power supply 25, the fact that first switch 21 includes first diode 21b provided in the direction in which a current supplied by main power supply 10 flows to load 12 is utilized and a control procedure to avoid all four switches (first switch 21, second switch 22, third switch 23 and fourth switch 24) from being turned off at the same time is performed, so that the supply voltage to load 12 is prevented from being cut off when switching the power supply.

In addition, in the embodiment, variation, and implementation examples described above, first diode 21b and second diode 22b have their cathode connected to each other (that is, they are arranged so that their cathodes face inward), and third diode 23b and fourth diode 24b have their cathode connected to each other (that is, they are arranged so that their cathodes face inward), but these diodes may also be connected in the opposite directions (that is, they face outward).

FIG. 12 is a circuit diagram showing the configuration of backup power supply device 30d according to another variation of the embodiment. Here, a configuration of backup power supply device 30d having the configuration in which the orientations of the four diodes (first diode 21b, second diode 22b, third diode 23b, and fourth diode 24b) included in backup power supply device 30 according to the embodiment shown in FIG. 4 are reversed.

In such backup power supply device 30d, in the control procedure for switching between main power supply 10 and auxiliary power supply 25, it is only needed to switch the on/off order of first switch 21 and second switch 22 and switch the on/off order of third switch 23 and fourth switch 24 compared to the case of the embodiment and the like.

For example, when the power supply that supplies the DC voltage to load 12 is switched from main power supply 10 to auxiliary power supply 25 ((a) in FIG. 7), in step S30, instead of turning off first switch 21 from on, second switch 22 is turned off from on. In addition, in step S31a, instead of turning on fourth switch 24 from off, third switch 23 is turned on from off. In addition, in step S31b, instead of turning on third switch 23 from off, fourth switch 24 is turned on from off. Furthermore, in step S32, instead of turning off second switch 22 from on, first switch 21 is turned off from on.

In addition, when the power supply that supplies the DC voltage to load 12 is switched from auxiliary power supply 25 to main power supply 10 ((b) in FIG. 7), in step S40, instead of turning on second switch 22 from off, first switch 21 is turned on from off. In addition, in step S41a, instead of turning off third switch 23 from on, fourth switch 24 is turned off from on. In addition, in step S41b, instead of turning off fourth switch 24 from on, third switch 23 is turned off from on. Furthermore, in step S42, instead of turning on first switch 21 from off, second switch 22 is turned on from off.

Such a control procedure provides the effect of suppressing the supply voltage to load 12 being cut off when the power supply is switched, as in the embodiment.

In addition, according to backup power supply device 30d with such a configuration, by turning on and off first switch 21, second switch 22, third switch 23, and fourth switch 24, it is possible to select whether the voltage values of main power supply 10 and auxiliary power supply 25 are applied to each switch, so that in the unlikely event that one of the switches fails, the presence or absence of a failure can be confirmed from the voltage difference across the switch by monitoring the voltage across the switch.

In backup power supply device 30 according to the embodiment described above, for example, when checking whether second switch 22 has a short circuit failure without cutting off the voltage of load 12, third switch 23 and fourth switch 24 are turned on to supply power from auxiliary power supply 25 to load 12, and the voltage across second switch 22 is checked, but even when first switch 21 is turned off, the voltage of main power supply 10 is supplied to second switch 22 via first diode 21b, so that when the voltage values of main power supply 10 and auxiliary power supply 25 are close to each other, it is impossible to accurately determine a short circuit failure of second switch 22.

In this respect, according to backup power supply device 30d according to the variation, when checking whether second switch 22 has a short circuit failure without cutting off the voltage of load 12, if third switch 23 and fourth switch 24 are turned on to supply power from auxiliary power supply 25 to load 12, and first switch 21 is turned off, the voltage of main power supply 10 is not applied to second switch 22, but only the voltage of auxiliary power supply 25 is applied to second switch 22, so that a voltage difference occurs across second switch 22, and it is possible to accurately determine a short circuit failure of second switch 22.

As described above, when expressed to cover both backup power supply device 30 according to the embodiment in which the diodes are connected inwardly and backup power supply device 30d according to the variation in which the diodes are connected outwardly, it can be said that the backup power supply according to the present disclosure has the following characteristics.

That is, the backup power supply according to the present disclosure is a backup power supply device that backs up a supply of a DC voltage from main power supply 10 to load 12, the backup power supply device including: first switch 21 that is inserted into a path connecting main power supply 10 and load 12, and turns on and off the supply of the DC voltage from main power supply 10 to load 12; second switch 22 that is inserted into a path connecting first switch 21 and load 12, and turns on and off the supply of the DC voltage to load 12 via first switch 21; auxiliary power supply 25 for supplying a DC voltage to load 12; third switch 23 that is inserted into a path connecting auxiliary power supply 25 and load 12, and turns on and off the supply of the DC voltage from auxiliary power supply 25 to load 12; fourth switch 24 that is inserted into a path connecting third switch 23 and load 12, and turns on and off the supply of the DC voltage to load 12 via third switch 23; and control circuit 31 that controls first switch 21, second switch 22, third switch 23, and fourth switch 24, wherein when a power supply that performs the supply of the DC voltage to load 12 is switched from main power supply 10 to auxiliary power supply 25, in a state where first switch 21 and second switch 22 are on, and third switch 23 and fourth switch 24 are off, control circuit 31 executes: first step S30 of turning off one of first switch 21 and second switch 22; second step S31 of turning on third switch 23 and fourth switch 24 after first step S30; and third step S32 of turning off the other of first switch 21 and second switch 22 after second step S31.

In addition, when the power supply that performs the supply of the DC voltage to load 12 is switched from auxiliary power supply 25 to main power supply 10, in a state where first switch 21 and second switch 22 are off, and third switch 23 and fourth switch 24 are on, control circuit 31 further executes: fourth step S40 of turning on one of first switch 21 and second switch 22; fifth step S41 of turning off third switch 23 and fourth switch 24 after fourth step S40; and sixth step S42 of turning on the other of first switch 21 and second switch 22 after fifth step S41.

The backup power supply device and control method therefor according to the present disclosure have been described above based on the embodiment, variations, and the like, but the present disclosure is not limited to these embodiment, variations, and the like. Forms obtained by making various modifications to the embodiment, variations, and the like that can be conceived by those skilled in the art, as well as other forms constructed by combining parts of structural components in the embodiment, variations, and the like, without departing from the spirit of the present disclosure, are also included in the scope of the present disclosure.

For example, in backup power supply device 30a shown in FIG. 9 and backup power supply device 30b shown in FIG. 10, electric storage element 25b is charged by main power supply 10, but instead of or in addition to main power supply 10, main power supply 10 is, it may be charged by another DC voltage source, which is different from main power supply 10.

In addition, although electric storage element 25b is charged by a voltage that has been stepped down the DC voltage supplied from main power supply 10, it is not limited to such a form, and it may be charged with no voltage conversion of the DC voltage supplied from main power supply 10 or by a stepped-up voltage. Similarly, the DC voltage output from electric storage element 25b is supplied to load 12 after being stepped-up, but may be supplied to load 12 with no voltage conversion or after being stepped down.

In addition, in the embodiment and the like described above, first switch 21, second switch 22, third switch 23, and fourth switch 24 are configured with MOSFETs including parasitic diodes, but this is not limited thereto, and it may also be configured with other types of semiconductor switch elements and diode elements.

### [Industrial Applicability]

The backup power supply device according to the present disclosure can be used as a backup power supply device that can prevent the supply voltage to the load from being cut off when the power supply that supplies a DC voltage to the load is switched, for example, as a power supply to back up the supply of the DC voltage by a vehicle power supply (battery).

### [Reference Signs List]

10 Main power supply
12 Load
20, 30, 30a, 30b, 30c, 30d Backup power supply device
21 First switch
21a, 21c First MOSFET
21b First diode
22 Second switch
22a, 22c Second MOSFET
22b Second diode
23 Third switch
23a, 23c Third MOSFET
23b Third diode
24 Fourth switch
24a, 24c Fourth MOSFET
24b Fourth diode
25 Auxiliary power supply
25a Step-down circuit
25b Electric storage element
25c Step-up circuit
25d Step-up/step-down circuit
26, 31 Control circuit

## Claims

1. A backup power supply device that backs up a supply of a DC voltage from a main power supply to a load, the backup power supply device comprising:
a first switch that is inserted into a path connecting the main power supply and the load, and turns on and off the supply of the DC voltage from the main power supply to the load;
a second switch that is inserted into a path connecting the first switch and the load, and turns on and off the supply of the DC voltage to the load via the first switch;
an auxiliary power supply for supplying a DC voltage to the load;
a third switch that is inserted into a path connecting the auxiliary power supply and the load, and turns on and off the supply of the DC voltage from the auxiliary power supply to the load;
a fourth switch that is inserted into a path connecting the third switch and the load, and turns on and off the supply of the DC voltage to the load via the third switch; and
a control circuit that controls the first switch, the second switch, the third switch, and the fourth switch.

2. The backup power supply device according to claim 1,
wherein when a power supply that performs the supply of the DC voltage to the load is switched from the main power supply to the auxiliary power supply, in a state where the first switch and the second switch are on, and the third switch and the fourth switch are off, the control circuit executes:
a first step of turning off one of the first switch and the second switch;
a second step of turning on the third switch and the fourth switch after the first step; and
a third step of turning off an other of the first switch and the second switch after the second step.

3. The backup power supply device according to claim 2,
wherein the third switch includes a third diode provided in a direction in which a current supplied from the auxiliary power flows to the fourth switch when the third switch is off, and
in the second step, after the fourth switch is turned on, the third switch is turned on.

4. The backup power supply device according to claim 2,
wherein the fourth switch includes a fourth diode provided in a direction in which a current flows from the third switch to the load when the fourth switch is off, and
in the second step, after the third switch is turned on, the fourth switch is turned on.

5. The backup power supply device according to any one of claims 2 to 4,
wherein when the power supply that performs the supply of the DC voltage to the load is switched from the auxiliary power supply to the main power supply, in a state where the first switch and the second switch are off, and the third switch and the fourth switch are on, the control circuit further executes:
a fourth step of turning on one of the first switch and the second switch;
a fifth step of turning off the third switch and the fourth switch after the fourth step; and
a sixth step of turning on an other of the first switch and the second switch after the fifth step.

6. The backup power supply device according to claim 5,
wherein the third switch includes a third diode provided in a direction in which a current supplied from the auxiliary power supply flows to the fourth switch when the third switch is off, and
in the fifth step, after the third switch is turned off, the fourth switch is turned off.

7. The backup power supply device according to claim 5,
wherein the fourth switch includes a fourth diode provided in a direction in which a current flows from the third switch to the load when the fourth switch is off, and
in the fifth step, after the fourth switch is turned off, the third switch is turned off.

8. The backup power supply device according to claim 1 or 2,
wherein the first switch includes a first diode provided in a direction in which a current supplied from the main power supply flows to the second switch when the first switch is off,
the second switch includes a second diode provided in a direction in which a current flows from the load to the first switch when the second switch is off,
the third switch includes a third diode provided in a direction in which a current supplied from the auxiliary power supply flows to the fourth switch when the third switch is off, and
the fourth switch includes a fourth diode provided in a direction in which a current flows from the load to the third switch when the fourth switch is off.

9. The backup power supply device according to claim 1 or 2,
wherein the first switch includes a first diode provided in a direction in which a current flows from the second switch to the main power supply when the first switch is off,
the second switch includes a second diode provided in a direction in which a current flows from the first switch to the load when the second switch is off,
the third switch includes a third diode provided in a direction in which a current flows from the fourth switch to the auxiliary power supply when the third switch is off, and
the fourth switch includes a fourth diode provided in a direction in which a current flows from the third switch to the load when the fourth switch is off.

10. The backup power supply device according to claim 8 or 9,
wherein the first switch, the second switch, the third switch, and the fourth switch are metal-oxide-semiconductor field-effect transistors (MOSFETs), and
the first diode, the second diode, the third diode, and the fourth diode are parasitic diodes of the MOSFETs.

11. The backup power supply device according to any one of claims 1 to 10,
wherein the auxiliary power supply includes an electric storage element that is charged with a current supplied from the main power supply.

12. The backup power supply device according to claim 11,
wherein the auxiliary power supply further includes:
a step-down circuit that steps down the DC voltage supplied from the main power supply to charge the electric storage element; and
a step-up circuit that steps up a DC voltage output from the electric storage element and supplies the DC voltage that has been stepped up to the load via the third switch and the fourth switch.

13. A control method for a backup power supply device that backs up a supply of a DC voltage from a main power supply to a load, the backup power supply device including:
a first switch that is inserted into a path connecting the main power supply and the load, and turns on and off the supply of the DC voltage from the main power supply to the load;
a second switch that is inserted into a path connecting the first switch and the load, and turns on and off the supply of the DC voltage to the load via the first switch;
an auxiliary power supply for supplying a DC voltage to the load; and
a third switch that is inserted into a path connecting the auxiliary power supply and the load, and turns on and off the supply of the DC voltage from the auxiliary power supply to the load;
a fourth switch that is inserted into a path connecting the third switch and the load, and turns on and off the supply of the DC voltage to the load via the third switch, the control method comprising:
when a power supply that performs the supply of the DC voltage to the load is switched from the main power supply to the auxiliary power supply, in a state where the first switch and the second switch are on, and the third switch and the fourth switch are off,
turning off one of the first switch and the second switch;
turning on the third switch and the fourth switch after turning off one of the first switch and the second switch; and
turning off an other of the first switch and the second switch after turning on the third switch and the fourth switch.
